# EUROPÄISCHE PATENTANMELDUNG

(11) **EP 1 829 746 A2**
(43) Veröffentlichungstag der Anmeldung: **05.09.2007**
(21) Anmeldenummer: 07001569.8
(22) Anmeldetag: 25.01.2007
(51) Int. Cl.: B60R 5/04

(54) **Haltevorrichtung für Ladegut**

(30) Priorität: 03.03.2006 DE 102006010377
(71) Anmelder: BOS GmbH & Co. KG, 73760 Ostfildern (DE)
(72) Erfinder: Bohlke, Hartmut, 42369 Wuppertal (DE); Gass, Dirk, 74389 Cleebronn (DE); Salewski, Jürgen, 40599 Düsseldorf (DE); Sitzler, Wolfgang, 42111 Wuppertal (DE); Hübner, Axel, 40822 Mettmann (DE)
(74) Vertreter: Rüger, Barthelt & Abel Patentanwälte

(57) **Zusammenfassung**

Eine Haltevorrichtung für Ladegut in Koffer- oder Laderäumen von PKW setzt sich aus einem Fußteil zusammen, das in einer Zurrschiene verschiebbar gehalten ist. An dem Fußteil ist eine Sicherungsmittel in Gestalt einer schwenkbaren Klappe oder einer Biegefeder befestigt. Mit Hilfe der federvorgespannten Klappe oder der Biegefeder lässt sich ein zu verstauendes Ladegut gegen eine Seitenwand des Kofferraums oder die Rückseite der Rücksitzlehne andrücken, so dass es durch die auftretenden Kräfte beim Fahren nicht hin und her geschleudert werden kann.

## Beschreibung

Bei den aktuellen Karosseriegestaltungen geben sich die Konstrukteure große Mühe einen Koffer- oder Laderaum zu schaffen, der von weitgehend glatten Wänden begrenzt wird. Diese Gestaltung ist vorteilhaft, wenn es darum geht, gro-ßes Ladegut wie Koffer im Kofferraum unterzubringen.

Wenn hingegen kleines Ladegut verstaut werden soll, fehlen die früher vorhandenen Taschen und Nischen in unangenehmer Weise. Es gibt keine Räume, in denen solches Ladegut so aufgenommen werden kann, dass es bei den normalerweise im Fahrbetrieb auftretenden Kurven-, Brems- und Beschleunigungskräften rutschsicher gehalten wird.

Ausgehend hiervon ist es Aufgabe der Erfindung, eine Haltevorrichtung für Ladegut, insbesondere für kleines Ladegut zu schaffen, um zu verhindern, dass solches Ladegut durch die dynamischen Kräfte im Fahrbetrieb im Kofferraum herumgeschleudert wird.

Diese Aufgabe wird erfindungsgemäß mit der Haltevorrichtung mit den Merkmalen des Anspruches 1 gelöst.

Die neue Haltevorrichtung geht davon aus, dass im Lade- oder Kofferraum Zurrschienen enthalten sind, die normalerweise dazu verwendet werden, mit Hilfe von verstellbaren Ösen größeres Ladegut rutschsicher zu verzurren.

Ausgehend von diesen Halteschienen weist die neue Haltevorrichtung ein Fußteil auf mit einer Auflagefläche. Aus der Auflagefläche des Fußteils steht ein Profilstück vor, dessen Querschnitt an den Querschnitt der Zurrschiene angepasst ist. Kofferräume in modernen Fahrzeugen haben heute üblicherweise T-Nuten, womit dementsprechend das Profilstück im Querschnitt gesehen T- oder pilzförmig ist. An diesem Fußteil ist ein Halteteil befestigt, das eine Anlagefläche für das Ladegut trägt.

Mit Hilfe der Anlagefläche ist es auf einfache Weise möglich, das festzuhaltende Ladegut zwischen der Haltevorrichtung und einer Wand des Kofferraums- oder Laderaums einzuklemmen. Dafür geeignete Wände sind die Seitenwand oder die Begrenzungswand, die den Lade- oder Kofferraum vom Fahrgastraum abtrennt beziehungsweise bei Kombi-Pkw die Rückseite der Rücksitzlehne.

Die von der Haltevorrichtung aufgebrachten Kräfte sollen lediglich ausreichen zu verhindern, dass das Ladegut bei einem scharfen Bremsvorgang sich im Lade- oder Kofferraum verselbständigt. Die Kräfte brauchen nicht so bemessen zu werden, um die Verankerung des Ladeguts auch bei einem Crash zu gewährleisten. Der Haltevorrichtung werden somit keine Gepäcksicherungsaufgaben aufgebürdet. Zur Sicherung im Crashfalle bleibt nach wie vor das Trenngitter, früher auch als Sicherheitsnetz bezeichnet, vorhanden.

Im Falle einer Zurrschiene mit Aufnahmenut setzt sich der Querschnitt dieser Nut aus einer etwa rechteckigen Nutenkammer und einem im Querschnitt rechteckigen Nutenschlitz zusammen.

Günstige Boden- oder Wandverhältnisse ergeben sich, wenn die Zurrschiene in der Nachbarschaft des Nutenschlitzes weitgehend glatt ist. Dies ermöglicht auch die Verwendung eines Fußteils mit glatter Auflagefläche, wodurch gute Haftreibungsverhältnisse zu Stande kommen. Die Haftreibungskraft ist bekanntlich im Gegensatz zur Gleitreibungskraft der Größe der Kontaktfläche etwa proportional. Wenn große Haftreibungskräfte erreicht werden können, braucht keine spezielle Verriegelungseinrichtung für das Fußteil vorgesehen zu werden. Es hält sich an dem betreffenden Ort der Zurrschiene aufgrund der Haftreibung und der Reaktionskraft, die durch das Anpressen des Ladeguts an die entsprechende Koffer- oder Laderraumwand entsteht.

Das Halten des Fußteils allein aufgrund der beim Verstauen auftretenden Reaktionskraft in Verbindung mit der Haftreibung des Fußteils auf der Schienenoberseite oder einer Verklemmung im Nutenschlitz hat den Vorteil einer sehr einfachen Bedienung. Es muss nichts entriegelt werden, um das Fußteil längs der Verzurrschiene verstellen zu können.

Es besteht jedoch auch die Möglichkeit, eine zusätzliche Arretierungsvorrichtung vorzusehen. Diese Arretierungsvorrichtung kann formschlüssig oder reibschlüssig wirken, um eine zusätzliche Haltekraft zu erzeugen.

Sowohl bei der formschlüssigen als auch bei der reibschlüssigen Arretierung ist es von Vorteil, wenn das Profilstück an der Auflagefläche des Fußteils in zwei Abschnitte aufgeteilt ist, zwischen denen ein bewegliches Rastglied eingefügt ist. Dieses bewegliche Rastglied kann die zusätzliche Reibkraft erzeugen oder als Rastnase formschlüssig in eine Verzahnung neben dem Nutenschlitz eingreifen.

Als Halteteil, das mit dem zu sichernden Lade- oder Gepäckstück zusammenwirkt, kommen mehrere Ausführungsformen in Frage. Im einfachsten Falle ist das Halteteil lediglich eine Blattfeder, die so mit dem Fußteil verbunden ist, dass die Biegeachse der Blattfeder im Gebrauchszustand parallel zur Längserstreckung der Führungsschiene läuft. Damit kann flaches Ladegut bei längs verlaufenden Zurrschienen an der Seitenwand des Lade- oder Kofferraums angedrückt festgehalten werden.

Eine andere Möglichkeit besteht darin, eine Blattfeder zu verwenden, deren Biegeachse rechtwinklig zu der Achse der Zurrschiene liegt. Diese Blattfeder wäre in der Lage, bei längs verlaufenden Zurrschienen ein Gepäckstück gegen die Stirnwand des Kofferraums angedrückt festzuhalten.

Besonders komfortabel wird die Handhabung einer solchen Blattfeder dann, wenn sie um eine Achse schwenkbar ist, die parallel zu der Längsachse der Zurrschiene verläuft. Die Reaktionskraft, die von der Blattfeder ausgeübt wird, wird auf die Zurrschiene übertragen, wobei sich das Fußteil in dem Nutenschlitz oder in der Nute verkantet. Hierdurch wird gleichzeitig bei entsprechender Dimensionierung des Verkantungswinkels und entsprechender Wahl des Reibungskoeffizienten eine Selbstarretierung erreicht, die die Verwendung von zusätzlichen Arretiergliedern entbehrlich macht.

Eine andere Möglichkeit für das Halteteil besteht in der Verwendung einer schwenkbaren Klappe, die über ein Scharnier mit dem Fußteil verbunden ist. Die Achse des Scharniers liegt vorteilhafterweise parallel zur Schienenlängserstreckung und kann in der gleichen Weise wie die zuvor erwähnte Blattfeder verwendet werden um das Ladegut gegen die Kofferraumseitenwand angedrückt festzuhalten.

Eine rechtwinklig zur Schienenlängsachse liegende Scharnierachse ist ebenfalls denkbar, wobei dann hier auch durch entsprechende Verkippung in dem Nutenschlitz dafür gesorgt wird, dass das Fußteil sich aufgrund des Verklemmeffektes selbsttätig arretiert. Die Ausrichtung der Scharnierachse parallel zu der Schienenlängsache ist diesbezüglich etwas fehlertoleranter, da die Haltekräfte in jedem Falle formschlüssig aufgenommen werden und auf keinen Fall zu einem Weggleiten des Fußteils beitragen kann.

Wenn das Ladegut mit hinreichender Kraft gegen die Seitenwand angedrückt wird, entsteht hierdurch eine Reibkraft zwischen dem Ladegut und der Kofferraumseitenwand in Fahrzeuglängsrichtung, die allemal ausreicht, um das Ladegut auch bei einer Vollbremsung sicher festzuhalten.

Eine besonders günstige Ausbildung der Klappe wird erreicht, wenn sie aus einem drahtförmigen Rahmen gebildet ist, in dem ein Netz oder eine Plane oder eine Tasche aufgespannt ist.

In der nachfolgenden Beschreibung sind prinzipielle Ausführungsbeispiele erläutert. Es versteht sich, dass diese Ausführungsbeispiele in Anpassung an die jeweiligen Verhältnisse in vielfältiger Weise abgewandelt oder ihre Merkmale miteinander kombiniert werden können.

In den Zeichnungen zeigen:
- Fig. 1: die Heckpartie eines Pkw in einer aufgebrochenen perspektivischen Darstellung unter Veranschaulichung eines netzförmigen Halteteils,
- Fig. 2: das Fußteil in einer vergrößerten Seitenansicht,
- Fig. 3: das Fußteil in einer Draufsicht,
- Fig. 4: eine Haltevorrichtung unter Verwendung einer einfachen Blattfeder,
- Fig. 5: eine Haltevorrichtung mit einer schwenkbaren Blattfeder und
- Fig. 6: ein Fußteil mit einer formschlüssigen Arretiereinrichtung, in einer perspektivischen Explosionsdarstellung mit Blick auf die Auflageseite.

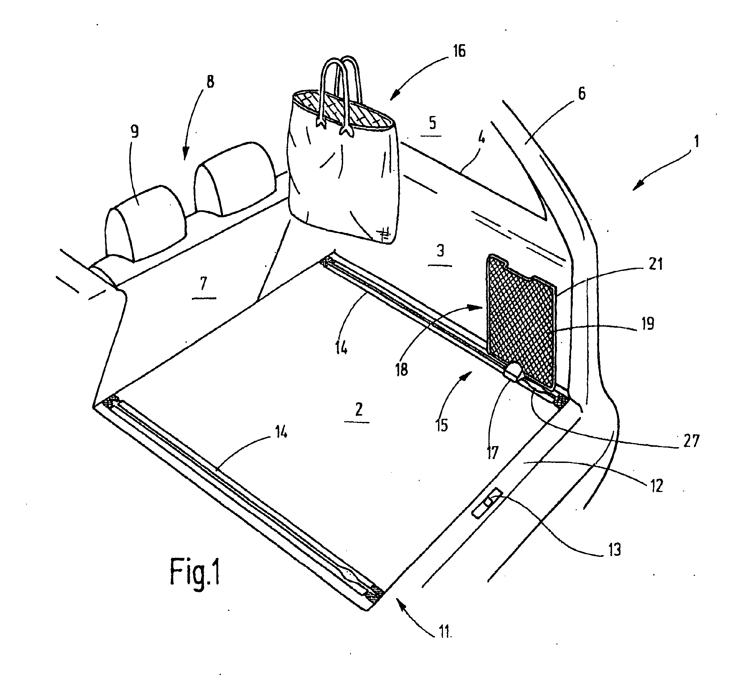

Fig. 1 zeigt einen Blick auf einen Lade- oder Kofferraum 1 eines Pkw oder Kombi-Pkw. Das Fahrzeug ist hierzu aufgebrochen perspektivisch veranschaulicht. Die Darstellung ist vereinfacht, um das Wesentliche erkennen zu lassen.

Zu dem Kofferraum 1 gehört ein Kofferraumboden 2, der seitlich von Seitenwänden 3 begrenzt ist. Zu der erkennbaren Seitenwand 3 ist eine weitere weg gebrochene Seitenwand spiegelbildlich. Die Kofferraumseitenwand 3 endet oben an einer Fensterunterkante 4 eines hinteren Seitenfensters 5, das in Längsrichtung bis zu einer D-Säule 6 reicht. Nach vorne hin wird der Kofferraum 1 von einer Rückwand 7 einer Rücksitzlehne 8 begrenzt, auf der Kopfstützen 9 erkennbar sind.

Zum Fahrzeugheck hin wird der Kofferraum 1 begrenzt von einer Laderaumöffnung 11, die seitlich vor der erkennbaren D-Säule 6 sowie einer zu der gezeigten D-Säule 6 spiegelbildlichen D-Säule im weg gebrochenen Bereich und einer Laderraumunterkante 12 begrenzt ist. Die obere Grenze bildet die Dachhinterkante, die wegen der abgebrochenen Darstellung nicht erkennbar ist. Der Boden 2 erreicht von der Ladebordkante 12, in die wie erkennbar ein Schlossgegenstück 13 eingesetzt ist, bis zu der Rückwand 7 in Fahrzeuglängsrichtung, und in Querrichtung von Seitenwand 3 bis zur gegenüber liegenden Kofferraumseitenwand.

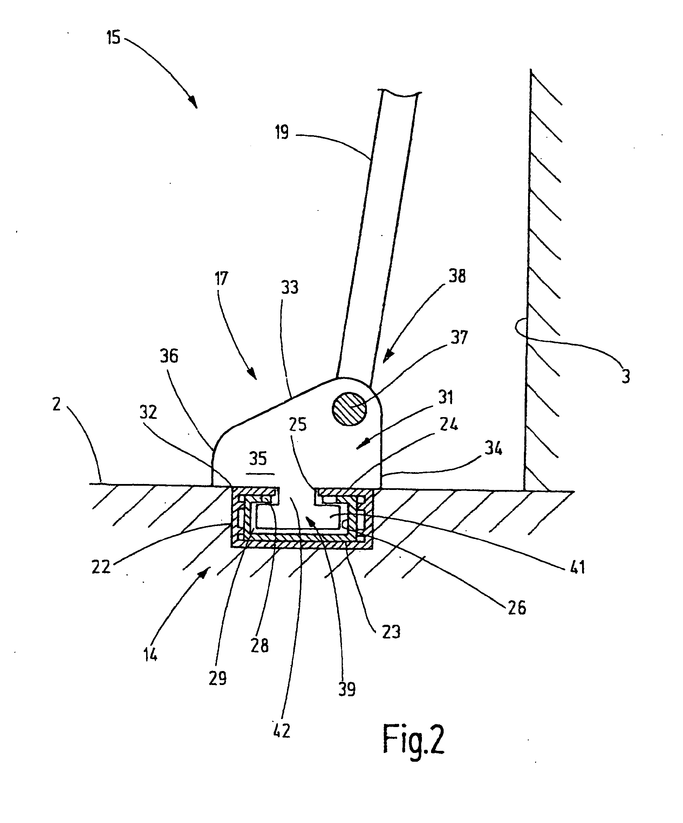

In dem Ladeboden 2 sind parallel nebeneinander zwei Zurrschienen 14 eingelassen, die unmittelbar in der Nähe zur betreffenden Kofferraumseitenwand 3 verlaufen. Das Querschnittsprofil der Zurrschienen 14 ergibt sich aus der Schnittdarstellung von Fig. 2.

In der Zurrschiene 14, die neben der rechten Fahrzeugseite verläuft, ist eine Haltevorrichtung 15 für zu verstauendes Ladegut, beispielsweise in Gestalt einer Einkaufstasche 16, veranschaulicht. Zu der Haltevorrichtung 15 gehören ein Fußteil 17, das in der Zurrschiene 14 läuft, sowie eine in dem Fußteil 17 schwenkbar anscharnierte Klappe 18. Die Klappe 18 besteht aus einem Rahmen 19, in dem ein Netz 21 aufgespannt ist. Der Rahmen 19 besteht aus einem entsprechend gebogenen zylindrischen Draht ausreichenden Querschnitts, um die erforderliche Festigkeit, zu erhalten.

Wie Fig. 2 erkennen lässt, setzt sich die Zurrschiene 14 aus zwei ineinander steckenden C-förmigen Profilschienen 22 und 23 zusammen. Die äußere Profilschiene 22 besteht aus einem eloxierten Aluminiummaterial, um ein korrosions- und verschleißfestes Äußeres zu bilden, während es sich bei der inneren Profilschiene 23 aus Festigkeitsgründen ein Stahlprofil handelt.

Die äußere Profilschiene 22 bildet mit der Oberseite des Bodens 2 bündig verlaufende Auflageflächen 24 beidseits eines Nuteschlitzes 25. Wie sich aus der Darstellung unmittelbar ergibt, mündet der Nutenschlitz 25 in eine Nutenkammer 26, die einen rechteckigen Querschnitt aufweist. Sowohl der Nutenschlitz 25 als auch die Nutenkammer 26 laufen über die Länge der Führungsschiene 14 durch. Lediglich in der Nähe der Ladebordkante 12 ist gemäß Fig. 2 der Nutenschlitz bei 27 erweitert, um das Fußteil 17 einsetzen zu können.

Die innere Profilschiene 23 ist beidseitig des Nutenschlitzes 25 mit einer Verzahnung 28 versehen. Durch die Verzahnung 28 entstehen äquidistant verteilte Zahnlücken, mit deren Hilfe es möglich ist, bei entsprechender Ausgestaltung das Fußteil 17 zu verrasten. Ein hierfür geeignetes Fußteil ist weiter unten im Einzelnen erläutert.

Der Nutenschlitz 25 bildet zusammen mit der Nutenkammer 26 eine T-Nut 29, die sich mit unverändertem Querschnitt, mit Ausnahme der Erweiterung 27, über die gesamte Länge der Zurrschiene 14 erstreckt. Da es sich um eine T-Nut handelt, handelt es sich auch um eine hinterschnittene Nut.

Das Fußteil 17 weist einen im Wesentlichen etwa quaderförmigen Grundkörper 31 auf, der nach unten von einer im Wesentlichen ebenen Auflagefläche 32, einer gegenüber der Auflagefläche schräg verlaufenden Oberseite 33 sowie insgesamt vier jeweils paarweise Schmalseiten 34, 35 und 36 begrenzt ist. Die zu der Schmalseite 35 parallele Schmalseite ist in der Darstellung von Fig. 2 nicht zu erkennen, da sie hinter der Zeichenebene liegt.

Im Bereich der Innenecke, wo die Oberseite 33 mit der Schmalseite 34 zusammen stößt, befindet sich eine Durchgangsbohrung 37, die ein Lagerauge bildet, durch das ein entsprechender Abschnitt des Rahmens 19 hindurch führt. Dieser Bereich des Rahmens 19 bildet zusammen mit der Durchgangsbohrung 37 ein Scharnier 38, dessen Scharnierachse wie erkennbar ist parallel zur Längserstreckung der Zurrschiene 14 verläuft.

Um das Fußteil 17 in der T-Nut 29 halten zu können, ist an der Auflagefläche 32 ein Profilstück 39 vorgesehen. Das Profilstück 39 verläuft parallel zu der Bohrung 37 etwa mittig über die Auflagefläche 32 von Schmalseite 35 zur gegenüberliegenden Schmalseite, die zu der Schmalseite 35 etwa parallel ist. Es setzt sich aus einem Flansch 41 und einer Stegleiste 42 zusammen. Der Querschnitt des Flansches 41 ist so gewählt, dass er in die Nutenkammer 26 passt, jedoch nicht durch den Nutenschlitz 25 nach Außen austreten kann. Die Stegleiste 42 hingegen, die den Flansch 41 mit der Auflagefläche 32 verbindet, führt durch den Nutenschlitz 25 hindurch.

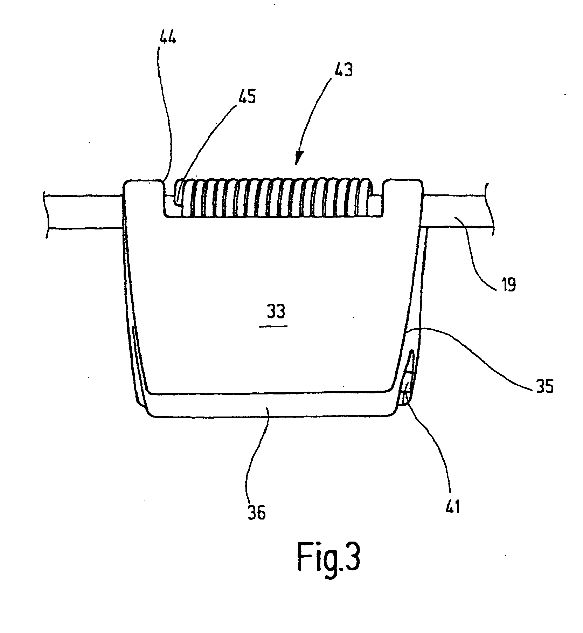

Um die Klappe 18 gegen die Seitenwand 3 andrücken zu können, ist eine Wickelfeder 43 gemäß Fig. 3 vorgesehen. Die Wickelfeder 43 umgibt koaxial den zylindrischen Abschnitt es Rahmens 19 im Bereich einer Tasche 44, die in dem Grundkörper 31 im Bereich der Durchgangsbohrung vorgesehen ist. Die Tasche 44 durchsetzt sowohl einen Teil der Oberseite 33 als auch einen Teil der Schmalseite 34, wie dies Fig. 3 unschwer erkennen lässt.

Die Tasche 44 befindet sich etwa mittig zwischen den beiden Schmalseiten 35.

Ein Ende der Wickelfeder 43 ist bei 45 mit dem Rahmen 19 verbunden, während das andere Ende der Wickelfeder 43 an einer in der Fig. 3 nicht zu sehenden Stelle in der Tasche 44 festgelegt ist.

Die Funktion und Handhabung der insoweit beschriebenen Haltevorrichtung 15 ist wie folgt:

Die Haltevorrichtung 15 wird in dem Lade- oder Kofferraum 1 eingesetzt, indem das Fußteil 17 mit dem Profilstück 39 voraus bei der Öffnung 27 in die Zurrschiene 14 eingesetzt wird. Sodann wird die Haltevorrichtung 15 mit dem Fußteil 17 längs der Zurrschiene 14 an die gewünschte Stelle vor der Seitenwand 3 geschoben. Hierzu wird gegen die Wirkung der Feder 43 die Klappe 18 von der Wand 3 entfernt gehalten.

Durch Wegschwenken der Klappe 18 kann in dem sich öffnenden V-förmigen Spalt die Einkaufstasche 16 eingesteckt werden. Nach Loslassen der Klappe 18 wird die Klappe 18 unter Wirkung der Wickelfeder 43 gegen die Einkaufstasche 16 gepresst, die daraufhin an der Seitenwand 3 anliegend gehalten wird.

Der Reibschluss zwischen dem Netz 21 und der Tasche 16 einerseits und andererseits zwischen der Tasche 16 und der Seitenwand 3 ist ausreichend, um zu verhindern, dass sich die aus der Haltevorrichtung 15 und der Tasche 16 bildende Gruppe bei Brems- oder Beschleunigungsvorgängen in Längsrichtung der Zurrschiene 14 in Bewegung setzt. Die Wickelfeder 43 ist ferner ausreichend dimensioniert, damit bei den üblichen Kurvenbeschleunigungen eine angemessen beladene Tasche 16 (ca. 3 kg schwer) die Klappe 18 nicht zur Seite schwenken wird.

Eine weitere Verankerungskraft für das Fußteil 17 entsteht auch durch den Reibschluss zwischen der Auflagefläche 32 und der Auflagefläche 24 an der Zurrschiene 14 sowie den zusammenwirkenden Flächen des Flansches 41 mit der entsprechenden Fläche der inneren Profilschiene 23. Diese Flächen sind hinreichend groß gewählt, damit die auftretende Haftreibung zusätzlich das Fußteil 17 gegen Verrutschen längs der Verzurrschiene 14 sichert.

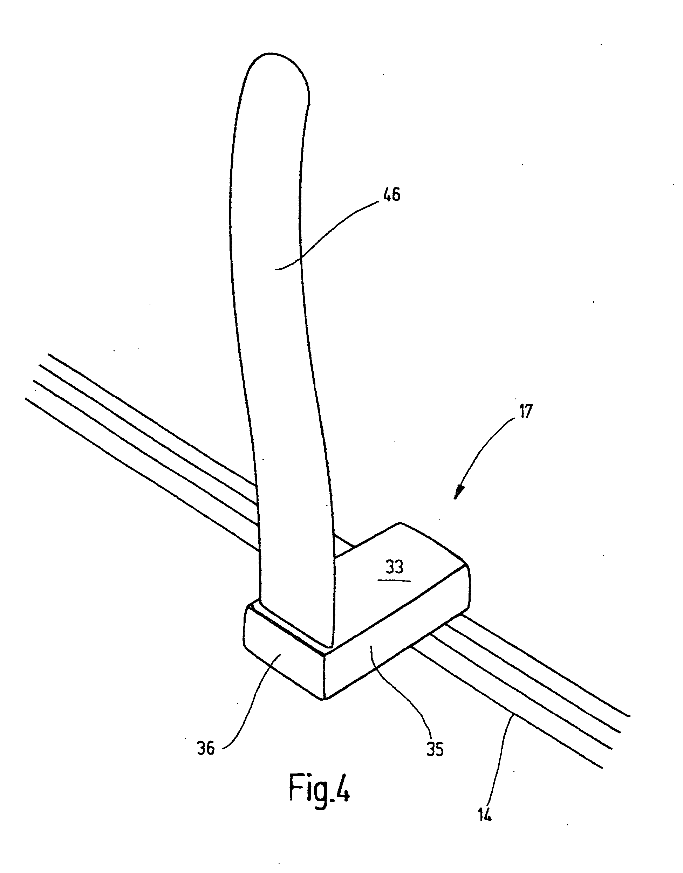

Fig. 4 zeigt eine andere Ausführungsform der Halteeinrichtung 15. Das Fußteil 17 hat bei der Ausführungsform nach Fig. 4 ein recht genau quaderförmige Gestalt, wiederum mit einer Oberseite 33, einer vom Betrachter weg zeigenden Unterseite, zwei Schmalseiten 35 sowie die Schmalseite 36 und eine dazu parallele nicht sichtbare Schmalseite. Im Gegensatz zu der Ausführungsform nach Fig. 2 liegt jedoch die Längsache des quaderförmigen Gebildes quer zu der Zurrschiene 14. Die Zurrschiene 14 hat die zuvor in Verbindung mit Fig. 2 erläuterte Gestalt, weshalb das Fußteil 17 an seiner unteren Auflageseite mit einer ähnlichen Struktur versehen ist, wie sie ausführlich im Zusammenhang mit Fig. 2 erläutert ist. Es besteht jedoch ein Unterschied in sofern, als das Profilstück 39 nunmehr außermittig angeordnet ist. Das Fußteil 17 zeigt bezogen auf die Zurrschiene 14 von der im Hintergrund gedachten Seitenwand 3 wegt. Die Schmalseite 36 hat somit einen größeren Abstand von der Zurrschiene 14, als die gegenüberliegenden Schmalseite, die der Kofferraumseitenwand 3 zugekehrt ist. Aus der Oberseite 33 steht eine Blattfeder 46 vor, die zungenförmig gestaltet ist und nach oben ragt. Zwischen dieser zungenförmigen Blattfeder 46 und der Seitenwand 3 kann, wie zuvor erläutert, ein Gepäckstück eingeklemmt werden.

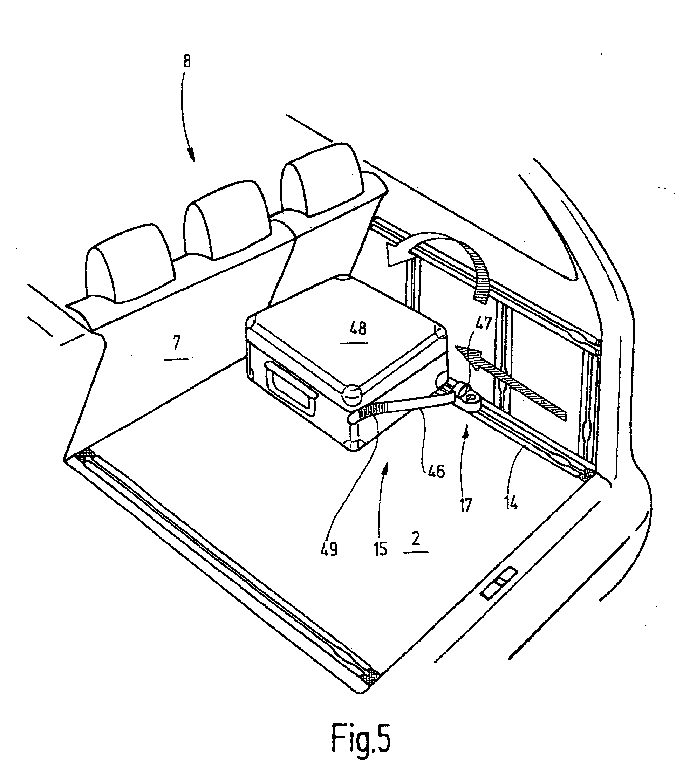

Während bei Fig. 4 die Biegeachse der Blattfeder 46 parallel zur Längserstreckung der Führungsschiene 14 liegt, zeigt Fig. 5 eine Ausführungsform, bei der die Biegeachse quer zur Längserstreckung der Führungsschiene 14 ausgerichtet ist.

Gemäß Fig. 5 trägt das Fußteil 17 zwei nach oben ragende Laschen 47, zwischen denen die Blattfeder 46 auf einem nicht erkennbaren Achsbolzen gelagert ist. Der Achsbolzen liegt parallel zur Längserstreckung der Führungsschiene 17, womit die Federzunge 46 um eine Achse parallel zur Längsachse des Fahrzeugs entsprechend einem Pfeil 47 geschwenkt werden kann. Sie kann damit aus einer aufgerichteten Stellung, in der sie senkrecht nach oben zeigt, in eine geschwenkte Stellung gebracht werden, in der sie nahezu parallel zu dem Ladeboden 2 liegt.

Die Handhabung veranschaulicht Fig. 5 in Verbindung mit einem kleinen Handkoffer 48. Der Handkoffer 48 wird gegen die Rückseite 7 in der Innenecke zu einer Seitenwand 3 geschoben. Sodann wird die Haltevorrichtung 15, wie beschrieben in die Zurrschiene 14 eingesetzt und längs dem geraden Pfeil in Richtung auf die Rückseite 7 der Rücksitzlehne 8 vorgeschoben, bis sie in der Nähe der benachbarten Seitenwand des Handkoffers 48 steht. Anschließend wird entsprechend dem gekrümmten Pfeil die Blattfeder 46 umgelegt, bis sie sich an den Koffer 48 anlehnt und diesen gegen die Rückseite 7 anpresst. Die entstehenden Reaktionskraft verkantet das Fußteil 17 in der Zurrschiene 14 und es entsteht eine Selbsthemmung, jedoch erst nachdem das Fußteil 17 in den richtigen Abstand zu dem Koffer gebracht wurde.

Die Haltewirkung der Federzunge 46 kann verbessert werden, wenn sie in ihrem Bereich, mit dem sie an dem Koffer 48 anlegt, mit einer reibungserhöhenden Beschichtung 49 versehen wird.

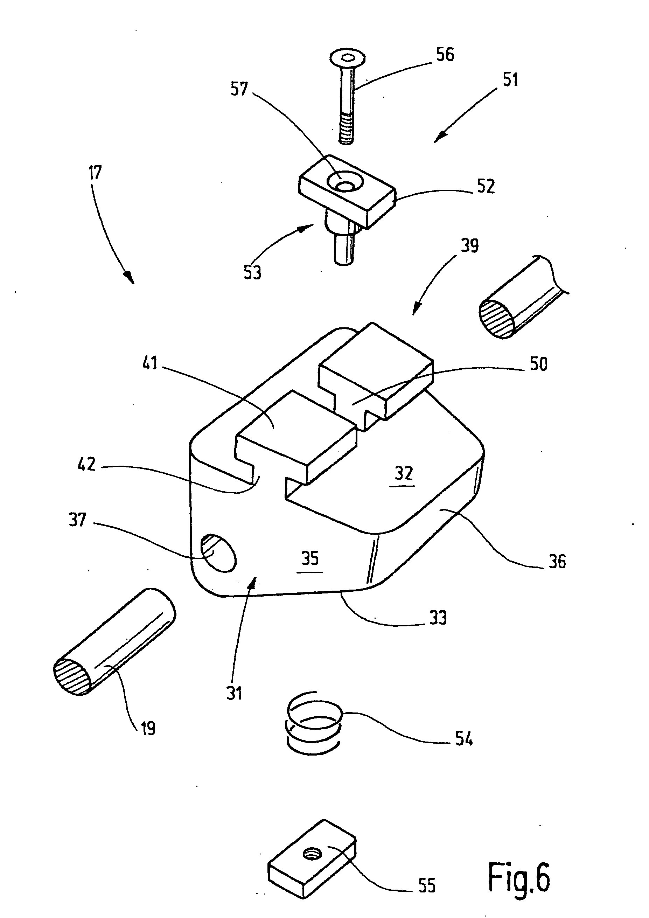

Fig. 6 zeigt eine Gestaltung des Fußteils 17, das eine formschlüssige Verriegelung in den Zahnlücken 28 der inneren Profilschiene 23 ermöglicht.

Das Fußteil 17, das eine Gestaltung entsprechend den Ausführungsbeispielen nach Fig. 1 bis 4 aufweist, ist im Bereich des Profilstücks 39 mit einer Lücke 50 versehen. Die Lücke 50 befindet sich etwa auf der Mitte bezogen auf die Längserstreckung des Profilstücks 39. In der Lücke 49 befindet sich eine durch den Grundkörper 31 hindurchführende in der Zeichnung nicht erkennbare Stufenbohrung. In dieser Stufenbohrung wird ein Rastglied 51 rechtwinklig zu der Auflagefläche 32 geführt.

Das Rastglied setzt sich aus einem quaderförmigen Rastkörper 52 und einem zylindrischen Schaft 53 zusammen. Der Rastkörper 52 hat eine Breite entsprechend der Lücke 49 und eine Dicke entsprechend der Dicke des Flanschs 41. Der Schaft 53 ist gestuft, wobei der Teil mit größeren Durchmesser an dem Rastkörper 52 angrenzt. Der Abschnitt dem kleineren Durchmesser ragt weiter durch den Grundkörper hindurch und wird in der Nähe der nicht erkennbaren Oberseite 33 von einer Schraubendruckfeder 54 umgeben. Auf dem freien Ende des Schaftes 53 sitzt schließlich eine Betätigungsplatte 55, die in einer entsprechenden taschenförmigen Ausnehmung in der Oberseite 33 liegt. Mittels einer durchgehenden Senkschraube 56, die durch eine Bohrung 57 hindurch führt, ist das Rastglied 51 mit der Tastplatte 55 verschraubt. Die Bohrung 57 führt koaxial durch den Schaft 53 und den Rastkörper 52 hindurch.

Die Schulter im Verlauf des Schaftes 53 soll verhindern, dass bei entnommenem Fußteil 17 der quaderförmige Rastkörper 52 von der Feder 54 bis unmittelbar an die Auflagefläche 32 anliegend bewegt wird.

Die Handhabung des beschriebenen Fußteils 17 nach Fig. 6 ist wie folgt: das Fußteil 17 wird wie zuvor erläutert in die Erweiterungsöffnung 27 der Zurrschiene 14 eingesetzt. Ohne Betätigung der Betätigungsplatte 55 ist der Spalt zwischen dem Rastkörper 52 und der Auflagefläche 32 kleiner, als es der Gesamtdicke der Zurrschiene 14 im Bereich neben dem Nutenschlitz 25 entspricht. Erst durch Niederdrücken d Betätigungsplatte 55 gegen die Wirkung der Feder 54 wird das Rastglied 51 mit dem Rastkörper 52 soweit eingedrückt, dass der Spalt zwischen der Auflagefläche 32 und dem Rastkörper 52 größer wird, als es der Dicke der Zurrschiene 14 in der Umgebung des Nutenschlitzes 25 entspricht. Die Dicke ist hierbei gemessen über die Dicke der äußeren Profilschiene 22 einschließlich der inneren Profilschiene 23, die die Verzahnung trägt.

Sobald das Fußteil 17 in die gewünschte Stellung längs der Zurrschiene 14 geschoben ist, wird die Betätigungsplatte 55 losgelassen. Geringfügiges Verschieben des Fußteils 17 längs der Zurrschiene 14 bringt das Fußteil 17 in eine Position, in der der Rastkörper 52 mit einer Zahnlücke 28 fluchtet. Die Druckfeder 54 kann jetzt den Rastkörper 52 nach oben in Richtung auf die Auflagefläche 32 hochziehen, wodurch der Rastkörper 52 in die Verzahnung 28 eingreifen kann. Damit ist das Fußteil längs der Führungsschiene 14 formschlüssig festgelegt.

Es versteht sich, dass die Zahnlücke 28 entsprechend gestaltet ist, um mit ausreichend kleinem, jedoch zur Funktion hinreichend großen Spiel, ein Einrasten des Rastkörpers 52 zu ermöglichen.

Da eine flache Verzahnung ausreicht, genügt es, wenn der Rastkörper 52 gemessen in Richtung quer zur Längserstreckung des Profilkörpers 39 etwas kürzer ist, als es der Breite des Flansches 41 entspricht. Es genügt, wenn der Rastkörper 52 geringfügig über die Stegleiste 42 übersteht.

Das beschriebene Fußteil 17 mit formschlüssiger Arretierung kann mit jeder beschriebenen Art von Haltemittel in Gestalt von Klappen oder Blattfedern verwendet werden.

Eine Haltevorrichtung für Ladegut in Koffer- oder Laderäumen von PKW setzt sich aus einem Fußteil zusammen, das in einer Zurrschiene verschiebbar gehalten ist. An dem Fußteil ist eine Sicherungsmittel in Gestalt einer schwenkbaren Klappe oder einer Biegefeder befestigt. Mit Hilfe der federvorgespannten Klappe oder der Biegefeder lässt sich ein zu verstauendes Ladegut gegen eine Seitenwand des Kofferraums oder die Rückseite der Rücksitzlehne andrücken, so dass es durch die auftretenden Kräfte beim Fahren nicht hin und her geschleudert werden kann.

## Patentansprüche

1. Haltevorrichtung (15) für Ladegut (16) in einem Koffer- oder Laderaum (1) eines Kraftfahrzeugs, insbesondere eines PKW, unter Einsatz von wenigstens einer im Fahrzeug vorgesehenen Zurrschiene (14),
mit einem Fußteil (17), das eine Auflagefläche (32) aufweist,
mit einem Profilstück (39), das aus der Auflagefläche (32) vorsteht und einen Querschnitt aufweist, der zu dem Querschnitt des Verankerungsbereichs (29) der Zurrschiene (14) komplementär ist, und
mit einem Halteteil (18,46), das an dem Fußteil (17) befestigt ist und eine Anlagefläche für das Ladegut (16) trägt.

2. Haltevorrichtung nach Anspruch 1, **dadurch gekennzeichnet, dass** die Zurrschiene (14) eine Aufnahmenut (29) aufweist, deren Querschnitt sich aus einer vorzugsweise rechteckigen Nutenkammer (26) und einem im Querschnitt vorzugsweise rechteckigen Nutenschlitz (25) zusammensetzt.

3. Haltevorrichtung nach Anspruch 1, **dadurch gekennzeichnet, dass** die Zurrschiene (14) an der Außenseite angrenzend an den Nutenschlitz (25) eben ist.

4. Haltevorrichtung nach Anspruch 1, **dadurch gekennzeichnet, dass** die Auflagefläche (32) des Fußteils (17) eben ist.

5. Haltevorrichtung nach Anspruch 1, **dadurch gekennzeichnet, dass** das Fußteil (17) mit einer Arretierungseinrichtung (32,41;28,51) versehen ist, die derart gestaltet ist, dass das Fußteil (17) an der Zurrschiene in deren Längsrichtung arretierbar ist.

6. Haltevorrichtung nach Anspruch 1, **dadurch gekennzeichnet, dass** die Arretiereinrichtung (32,41) eine reibschlüssig wirkende Arretiereinrichtung ist.

7. Haltevorrichtung nach Anspruch 1, **dadurch gekennzeichnet, dass** die Arretiereinrichtung (32,41;28,51) eine willkürlich lösbare Klemmeinrichtung ist.

8. Haltevorrichtung nach Anspruch 1, **dadurch gekennzeichnet, dass** die Arretiereinrichtung (32,41;28,51) formschlüssig wirkend ausgebildet ist.

9. Haltevorrichtung nach Anspruch 1, **dadurch gekennzeichnet, dass** die Arretiereinrichtung (32,41;28,51) eine willkürlich lösbare Rasteinrichtung aufweist.

10. Haltevorrichtung nach Anspruch 1, **dadurch gekennzeichnet, dass** das Profilstück (39) in Richtung parallel zur Längserstreckung der Zurrschiene (14) eine größere Abmessung aufweist als in Richtung quer dazu.

11. Haltevorrichtung nach Anspruch 10, **dadurch gekennzeichnet, dass** das Profilstück (39) sich aus zwei räumlich voneinander getrennten pilsähnlichen Fortsätzen zusammensetzt, die eine Stegleiste (42) sowie einen Kopf (41) aufweisen, wobei die Stegleiste (41) derart bemessen ist, dass er durch den Schlitz (25) der Zurrschiene (14) passt.

12. Haltevorrichtung nach Anspruch 11, **dadurch gekennzeichnet, dass** zwischen den beiden das Profilstück (39) bildenden Fortsätzen ein Arretierglied (51) angeordnet ist, dass beweglich an dem Fußteil (17) gelagert ist.

13. Haltevorrichtung nach Anspruch 12, **dadurch gekennzeichnet, dass** das Arretierglied (51) in die Arretierstellung vorgespannt ist.

14. Haltevorrichtung nach Anspruch 1, **dadurch gekennzeichnet, dass** das Halteteil (18,46) von einer Blattfeder (46) gebildet ist, die starr mit dem Fußteil (17) verbunden ist.

15. Haltevorrichtung nach Anspruch 1, **dadurch gekennzeichnet, dass** das Halteteil (18,46) über ein Scharnier (19,37;47) mit dem Fußteil verbunden ist.

16. Haltevorrichtung nach Anspruch 1, **dadurch gekennzeichnet, dass** die Achse des Scharniers (19,37;47) quer oder parallel zu der Längsachse der Zurrschiene (14) verläuft, wenn die Haltevorrichtung (15) in eine Zurrschiene (14) eingesetzt ist.

17. Haltevorrichtung nach Anspruch 1, **dadurch gekennzeichnet, dass** das Halteteil (18) mittels einer Feder (43) in eine Schwenkstellung bezüglich der Scharnierachse vorgespannt ist.

18. Haltevorrichtung nach Anspruch 17, **dadurch gekennzeichnet, dass** die Feder (43) eine wickelfeder ist.

19. Haltevorrichtung nach Anspruch 1, **dadurch gekennzeichnet, dass** das Halteteil (18) klappenförmig gestaltet ist.

20. Haltevorrichtung nach Anspruch 1, **dadurch gekennzeichnet, dass** das Halteteil (18) einen Rahmen (19) aufweist, in dem ein Netz (21) aufgespannt ist.

21. Haltevorrichtung nach Anspruch 15 und 20, **dadurch gekennzeichnet, dass** ein Abschnitt des Rahmens (19) die Achse des Scharniers (19,37;47) bildet.
